# EUROPÄISCHE PATENTANMELDUNG

(11) **EP 1 156 433 A1**
(43) Veröffentlichungstag der Anmeldung: **21.11.2001**
(21) Anmeldenummer: 00110088.2
(22) Anmeldetag: 12.05.2000
(51) Int. Cl.: G06F 17/60, G07F 7/10

(54) **Verfahren zur Vermittlung des Zusatznutzens eines Konsumartikels**

(71) Anmelder: SOREMARTEC S.A., 6700 Arlon-Schoppach (BE)
(72) Erfinder: Ferrero, Pietro, Dr. SOREMARTEC S.A., B-6700 Arlon-Schoppach (BE)
(74) Vertreter: Lins, Edgar, Dipl.-Phys. Dr.jur.

(57) **Zusammenfassung**

Die Erfindung betrifft ein Verfahren zur Vermittlung eines Zusatznutzens beim Kauf eines primär auf einen Hauptnutzen gerichteten Konsumartikels, insbesondere Lebensmittels, das dadurch gekennzeichnet ist,
dass für die Vermittlung des Zusatznutzens ein individueller Code zur Verfügung gestellt wird,
dass in einem öffentlichen Datennetz ein Vorrat an Programmen vorgehalten wird, auf den mittels des individuellen Codes mit einem zum Zugang in das öffentliche Datennetz geeignetes Datenverarbeitungsgerät zugegriffen werden kann,
dass in angebotenes gestartetes Programm für eine vorbestimmte Zeit für den Zugriff zur Verfügung bleibt und
dass der individuelle Code nach einer vorbestimmten Anzahl von Zugriffen für weitere Zugriffe gesperrt wird.

## Beschreibung

Die Erfindung betrifft ein Verfahren zur Vermittlung eines Zusatznutzens beim Kauf eines primär auf einen Hauptnutzen gerichteten Konsumartikels, insbesondere Lebensmittels.

Die Erfindung betrifft ferner einen Konsumartikel mit einem Hauptnutzen, insbesondere als Lebensmittel, und einem Zusatznutzen, insbesondere zum Spielen.

Die Erfindung betrifft ferner eine Datenbank, die zur Durchführung des genannten Verfahrens geeignet ist.

Es ist bekannt, Konsumartikel auf den Markt zu bringen, die dem Käufer mehrfache Nutzen ermöglichen. Ein bekanntes Beispiel ist das "Kinder-Überraschungs-Ei" der Anmelderin, bei dem im Innern eines hohlen Eies aus einer Schokoladen-Milchcreme-Schicht ein Behälter in Form einer zweiteiligen Kunststoffkapsel angeordnet ist, in der sich kleine Spielfiguren befinden, die ggf. nach einer Bauanleitung zusammen gesetzt werden müssen. Beim Erwerb des Milch-Schoko-Eies steht dem Erwerber somit einerseits eine wohlschmeckende Süßigkeit, andererseits ein den Beschäftigungstrieb anregendes Spielzeug zur Verfügung.

Obwohl die Hauptzielgruppe dieser Artikel Kinder und Jugendliche sind, hat es sich gezeigt, dass aufgrund des Zusatznutzens auch Erwachsene an dem Artikel interessiert sind, insbesondere um die Spielfiguren zu sammeln.

Es erfordert einen erheblichen Aufwand, immer neue Spielgegenstände zu erarbeiten, die auf kleinstem Raum innerhalb der Kapsel untergebracht werden können und neue Variationen des Spielerlebens, insbesondere des Zusammensetzens des Spielgegenstandes, ermöglichen. Problematisch ist ferner, dass die Spielgegenstände für ein möglichst breites Alterspektrum interessant sein sollen, damit kleinere Kinder nicht durch Überforderung frustriert werden und ältere Kinder den angebotenen Artikel nicht als "Kinderkram" abtun.

Der vorliegenden Erfindung liegt die Problemstellung zugrunde, den mit einem Konsumartikel vermittelbaren Zusatznutzen zu erweitern und prinzipiell an den jeweiligen Konsumenten anpassbar zu gestalten. Ausgehend von dieser Problemstellung ist erfindungsgemäß ein Verfahren der eingangs erwähnten Art dadurch gekennzeichnet, dass für den Zusatznutzen ein individueller Code übermittelt wird, dass in einem öffentlichen Datennetz ein Vorrat an Programmen vorgehalten wird, auf den mittels des individuellen Codes mit einem zum Zugang in das öffentliche Datennetz geeigneten Datenverarbeitungsgerät zugegriffen werden kann, dass ein angebotenes gestartetes Programm für eine vorbestimmte Zeit für den Zugriff zur Verfügung bleibt und dass der individuelle Code nach einer vorbestimmten Anzahl von Zugriffen für weitere Zugriffe gesperrt wird.

Bei dem erfindungsgemäßen Verfahren wird dem Erwerber des Konsumartikels ein individueller Code zur Verfügung gestellt, beispielsweise in Form eines gedruckten alphanumerischen Codes, mit dem der Käufer des Konsumartikels als Benutzer mit einem geeigneten Datenverarbeitungsgerät auf einen Programmvorrat in einem öffentlichen Datennetz, insbesondere im Internet, zugreifen kann. Dies kann beispielsweise dadurch geschehen, dass eine vorbestimmte, ggf. mit dem Code mitgeteilte Adresse aufgerufen wird, durch die eine Website zugänglich ist, auf der durch Eingabe des individuellen Codes in das Gerät ein Zugriff auf den vorgehaltenen Vorrat an Programmen möglich ist. Ein aus dem Programmangebot ausgewähltes und gestartetes Programm bleibt dann für eine vorbestimmte Zeit, beispielsweise 30 Minuten, für den Zugriff zur Verfügung, sodass für die vorbestimmte Zeit das als Überraschung angebotene Programm genossen werden kann. Nach einer vorbestimmten Anzahl von Zugriffen, vorzugsweise nach einem einzigen Zugriff, wird der individuelle Code für weitere Zugriffe gesperrt.

Besonders vorteilhaft ist das erfindungsgemäße Verfahren, wenn vor dem Zugriff auf den Vorrat persönliche Daten des Zugreifenden interaktiv abgefragt werden und in Abhängigkeit von eingegebenen persönlichen Daten ein geeignetes Programm angeboten wird. Die hierfür benötigten persönlichen Daten können insbesondere in einer Altersangabe des Benutzers bestehen, um ein altersgerechtes Angebot zu machen. Ferner ist es denkbar, Interessen abzufragen, um unterschiedliche Programme anbieten zu können, die beispielsweise in erster Linie lehrreich, in erster Linie passiv unterhalten oder in erster Linie zum aktiven Mitspielen ausgestaltet sind. Demgemäß können Programme jeweils einer Programmgruppe zugeordnet sein und durch die abgefragten Daten des Benutzers die Auswahl der Programmgruppe vorgenommen werden. Die Auswahl des Programmes innerhalb der bestimmten Programmgruppe kann durch ein Zufallsprogramm bei dem jeweiligen Zugriff vorgenommen werden, alternativ aber auch durch den individuellen Code vorbestimmt sein. Im erstgenannten Fall ist es möglich, dem Benutzer später den Zugriff auf beispielsweise dasselbe Spiel zu ermöglichen, um eine vorher erbrachte Leistung ggf. zu übertreffen. Hierfür kann am Ende der Zugriffszeit ein persönliches Passwort des Benutzers abgefragt werden, durch das bei einem späteren Zugriff dasselbe Programm (dasselbe Spiel) wieder aufrufbar ist.
Für den Verkauf des Konsumartikels ist es sehr zweckmäßig, wenn neben dem Code ein weiterer Zusatznutzen vermittelt wird, da nicht alle Käufer über ein Datenverarbeitungsgerät zur Ausnutzung des mit dem Code ermöglichten Zusatznutzen verfügen. Der weitere Zusatznutzen kann in an sich bekannter Weise in Form eines kleinen Spielzeugs in einem in dem Konsumartikel transportierten Behälter untergebracht sein, in dem zweckmäßigerweise auch der Code untergebracht wird.

Ausgehend von der oben erwähnten Problemstellung ist ferner erfindungsgemäß ein Konsumartikel der eingangs erwähnten Art dadurch gekennzeichnet, dass er für den Zusatznutzen einen individuellen Code enthält, der Schlüsseldaten für einen Zugriff mittels eines Datenverarbeitungsgerätes mit Zugang zu einem öffentlichen Datennetz auf durch die Schlüsseldaten zugängliche Angebote in dem Datennetz für eine begrenzte Zeit freigibt. Der Konsumartikel ist somit für die Durchführung des beschriebenen Verfahrens geeignet.

Besonders zweckmäßig ist dabei, wenn der individuelle Code zusätzlich Daten zur Individualisierung enthält, die eine Sperrung des individuellen Codes nach einer Benutzung der Schlüsseldaten ermöglichen.

Weitere bevorzugte Merkmale des erfindungsgemäßen Konsumartikels ergeben sich aus den beschriebenen bevorzugten Ausführungsformen des erfindungsgemäßen Verfahrens.

Zur Durchführung des erfindungsgemäßen Verfahrens eignet sich ferner eine Datenbank für einen Betrieb in einem öffentlichen Datennetz, die in herkömmlicher Weise mit einem individuellen Code zugänglich ist, der Schlüsseldaten für den Zugriff auf die Datenbank und zusätzliche Daten zur Individualisierung enthält, wenn die Datenbank erfindungsgemäß dadurch gekennzeichnet ist, dass nach dem Zugriff auf die Datenbank ein Programm der Datenbank für eine vorbestimmte Zeit initialisierbar ist und der individuelle Code nach einer vorbestimmten Anzahl von Zugriffen automatisch blockiert wird. Vorzugsweise wird der individuelle Code bereits nach einem einmaligen Zugriff auf ein angebotenes Programm automatisch blockiert.

Bei der erfindungsgemäßen Datenbank kann ein durch den individuellen Code vorbestimmtes Programm zum Zugriff angeboten werden oder alternativ durch den individuellen Code lediglich der Zugang zum Programmangebot freigegeben werden und die Auswahl eines angebotenen Programms mittels eines Auswahlprogramms, das ein Zufallsgenerator sein kann, erfolgen.

In einer bevorzugten Ausführungsform wird vor dem Anbieten eines Programms ein Initialisierungsdialog gestartet, in dem Daten des Benutzers abgefragt werden und das angebotene Programm in Abhängigkeit von den mitgeteilten Daten des Benutzers ausgewählt werden.

Zweckmäßigerweise geschieht dies dadurch, dass durch den individuellen Code in der Datenbank jeweils ein Programm in einer Programmgruppe aufrufbar ist und die Auswahl der Programmgruppe durch die mitgeteilten Daten des Benutzers bestimmt wird.

Die erfindungsgemäße Datenbank besitzt vorzugsweise eine Speichereinrichtung für benutzte - und damit blockierte - individuelle Codes. Ferner kann eine Speichereinrichtung für persönliche Passwörter vorgesehen sein, die einem bei der Eingabe des Passwortes aufgerufenen Programm zugeordnet sind. Dadurch ist es möglich, bei einem erneuten Zugriff auf das Programmangebot mittels eines neuen individuellen Codes durch die Angabe des Passwortes ein bestimmtes, früher bereits aufgerufenes Programm wieder aufzurufen, um beispielsweise ein früher erzieltes Spielergebnis zu übertreffen.

Die erfindungsgemäße Datenbank ist vorzugsweise isoliert ohne Links auf andere Angebote aufgebaut. Dies ermöglicht eine strenge Kontrolle der Datenbank, die erforderlich ist, wenn insbesondere auch jüngere Kinder auf die Datenbank zugreifen können sollen.

Die Erfindung soll im Folgenden anhand eines Ausführungsbeispiels näher erläutert werden. Beim Erwerb eines Konsumartikels, beispielsweise eines Schokoladeneies, erhält der Käufer eine in dem Schokoladenei untergebrachte Kapsel, in der sich ein gedruckter alphanumerischer Code nach Art einer Losnummer und vorzugsweise ein bisher übliches Kleinspielzeug befindet. Zweckmäßigerweise ist neben dem alphanumerischen Code eine spezielle Internetadresse des Anbieters des Konsumartikels angegeben. Mit einem geeigneten Datenverarbeitungsgerät, beispielsweise einem Personalcomputer, der einen Internetzugang aufweist, kann die Internetadresse angewählt werden. Es erscheint eine Portalseite, durch die eine spezielle Figur leiten kann.

Mit einer Wanderung durch die Portalseite erfolgt eine Abfrage von persönlichen Daten, nämlich des Alters, indem eine zutreffende von vier Altersstufen angeklickt wird. Die vier Altersstufen können beispielsweise sein: 3 bis 6 Jahren, 7 bis 11 Jahre, 12 bis 18 Jahre, über 18 Jahre.

Ferner wird die Art der Überraschung abgefragt, die man als angebotenes Programm erleben möchte. Mögliche Arten sind Videospiele, Cartoons, Dokumentationen, Entdeckungen, Neuigkeiten.

Aufgrund der Auswahl der Programmgruppe und der angegebenen Altersstufe erfolgt eine Auswahl eines in die betreffende Programmgruppe gehörenden Programms, wobei die Auswahl durch ein Auswahlprogramm der Datenbank, beispielsweise mit einem Zufallsgenerator, vorgenommen werden kann oder bereits durch den individuellen Code vorgegeben ist.

Die aufgerufene Internetseite ist eine geschlossene Seite, die keine Links zu anderen Internetseiten enthält und die gegen das Einbringen von fremden Informationen gesichert ist. Die Internetseite ist ferner geschützt, d.h. von ihr aus ist es nicht möglich Programm oder Programmteile, einschließlich Bilder oder Musik, auf den persönlichen Computer herunter zu laden.

Nach der Auswahl des bestimmten Programms kann dieses Programm für eine begrenzte Zeit, beispielsweise etwa 30 Minuten, genutzt werden. Insbesondere für junge Leute und Erwachsene wird eine Möglichkeit angeboten, nach der Beendigung des Programms ein persönliches Passwort einzugeben, um beim nächsten Internetzugriff das bestimmte Programm wieder aufrufen zu können. Das Passwort hat dann beispielsweise Vorrang vor dem Auswahlprogramm der Datenbank.

So ist es möglich, ein Videospiel, das Leistung bzw. Erfolg misst, erneut aufzurufen, um das erreichte Ergebnis bei diesem Videospiel möglichst zu verbessern.

Eine unkontrollierte Wiederholung des Zugriffes mit Hilfe eines einmal erworbenen individuellen Codes kann seitens der Datenbank dadurch verhindert werden, dass die Datenbank eine Speichereinrichtung für einmal benutzte individuelle Codes aufweist, sodass bei der Eingabe eines individuellen Codes ein Vergleich mit bereits abgespeicherten individuellen Codes stattfindet. Befindet sich der individuelle Code bereits in der Speichereinrichtung für "verbrauchte Codes", ist hierdurch ein wiederholter Zugriffsversuch erkennbar. Der Zugriff wird dann von der Datenbank abgelehnt. Selbstverständlich ist es möglich, für jeden individuellen Code eine vorbestimmte Anzahl von Zugriffen zu ermöglichen. In der Speichereinrichtung werden dann die benutzten Codes mit jeweils einer Kennzahl für die Anzahl der bereits getätigten Zugriffe abgelegt. Die Verweigerung des Zugriffs findet statt, wenn die maximale Anzahl von Zugriffen bereits getätigt worden ist.

Die beschriebene Erfindung erlaubt eine neue Benutzungsweise einer Programmdatenbank in einem öffentlichen Datennetz aufgrund der beschriebenen insularen Ausbildung der Datenbank und des strikt begrenzten Zugangs zu Programmen der Datenbank.

## Patentansprüche

1. Verfahren zur Vermittlung eines Zusatznutzens beim Kauf eines primär auf einen Hauptnutzen gerichteten Konsumartikels, insbesondere Lebensmittels,
**dadurch gekennzeichnet,**
**dass** für die Vermittlung des Zusatznutzens ein individueller Code zur Verfügung gestellt wird,
**dass** in einem öffentlichen Datennetz ein Vorrat an Programmen vorgehalten wird, auf den mittels des individuellen Codes mit einem zum Zugang in das öffentliche Datennetz geeignetes Datenverarbeitungsgerät zugegriffen werden kann,
**dass** ein angebotenes gestartetes Programm für eine vorbestimmte Zeit für den Zugriff zur Verfügung bleibt und
**dass** der individuelle Code nach einer vorbestimmten Anzahl von Zugriffen für weitere Zugriffe gesperrt wird.

2. Verfahren nach Anspruch 1, **dadurch gekennzeichnet, dass** vor dem Zugriff auf den Vorrat persönliche Daten des Zugreifenden interaktiv abgefragt werden und dass in Abhängigkeit von eingegebenen persönlichen Daten ein geeigneten Programm angeboten wird.

3. Verfahren nach Anspruch 2, **dadurch gekennzeichnet, dass** die Programme in Programmgruppen eingeteilt sind und dass die Auswahl der Programmgruppe durch die mitgeteilten Daten des Benutzers bestimmt wird.

4. Verfahren nach einem der Ansprüche 1 bis 3, **dadurch gekennzeichnet, dass** neben dem Code ein weiter Zweitnutzen vermittelt wird.

5. Verfahren nach Anspruch 4, **dadurch gekennzeichnet, dass** der weitere Zweitnutzen in Form eines kleinen Spielzeugs in einem in dem Konsumartikel transportierten Behälter untergebracht wird.

6. Verfahren nach Anspruch 5, **dadurch gekennzeichnet, dass** auch der Code in schriftlicher Form in dem Behälter untergebracht wird.

7. Verfahren nach einem der Ansprüche 1 bis 6, **dadurch gekennzeichnet, dass** der individuelle Code nach einem einmaligen Zugriff auf ein angebotenes Programm gesperrt wird.

8. Konsumartikel mit einem Hauptnutzen, insbesondere als Lebensmittel und einem Zweitnutzen, insbesondere zum Spielen, **dadurch gekennzeichnet, dass** er für den Zweitnutzen einen individuellen Code enthält, der Schlüsseldaten für einen Zugriff mittels eines Datenverarbeitungsgeräts mit Zugang zu einem öffentlichen Datennetz auf durch die Schlüsseldaten zugängliche Angebote in dem Datennetz für eine begrenzte Zeit freigibt.

9. Konsumartikel nach Anspruch 8, **dadurch gekennzeichnet, dass** der individuelle Code zusätzliche Daten zur Individualisierung enthält, die eine Sperrung des individuellen Codes nach einer Benutzung der Schlüsseldaten ermöglichen.

10. Konsumartikel nach Anspruch 8 oder 9, **gekennzeichnet durch** einen Gegenstand für einen weiteren Zweitnutzen neben dem Code.

11. Konsumartikel nach einem der Ansprüche 8 bis 10, bei dem der Konsumartikel einen Behälter für den Zweitnutzen enthält, **dadurch gekennzeichnet, dass** der Code in schriftlicher Form in dem Behälter angeordnet ist.

12. Konsumartikel nach Anspruch 10 und 11, **dadurch gekennzeichnet, dass** der Gegenstand für den weiteren Zweitnutzen ebenfalls in dem Behälter angeordnet ist.

13. Datenbank für einen Betrieb in einem öffentlichen Datennetz, die mit einem individuellen Code zugängig ist, der Schlüsseldaten für den Zugriff auf die Datenbank und zusätzliche Daten zur Individualisierung enthält, **dadurch gekennzeichnet, dass** nach dem Zugriff auf die Datenbank ein Programm der Datenbank für eine vorbestimmte Zeit initialisierbar ist und dass der individuelle Code nach einer vorbestimmten Anzahl von Zugriffen automatisch blockiert wird.

14. Datenbank nach Anspruch 13, **dadurch gekennzeichnet, dass** der individuelle Code nach einem einmaligen Zugriff auf ein angebotenes Programm automatisch blockiert wird.

15. Datenbank nach Anspruch 13 oder 14, **dadurch gekennzeichnet, dass** ein durch den individuellen Code vorbestimmtes Programm zum Zugriff angeboten wird.

16. Datenbank nach Anspruch 13 oder 14, **dadurch gekennzeichnet, dass** durch den individuellen Code der Zugang zum Programmangebot freigegeben wird und dass die Auswahl eines angebotenen Programms mittels eines Auswahlprogramms erfolgt.

17. Datenbank nach einem der Ansprüche 13 bis 16, **dadurch gekennzeichnet, dass** vor dem Anbieten eines Programms ein Initialisierungsdialog gestartet wird, in dem Daten des Benutzers abgefragt werden und dass das angebotene Programm in Abhängigkeit von den mitgeteilten Daten des Benutzers ausgewählt wird.

18. Datenbank nach Anspruch 17, **dadurch gekennzeichnet, dass** durch den individuellen Code in der Datenbank jeweils ein Programm in einer Programmgruppe aufrufbar ist und dass die Auswahl der Programmgruppe durch die mitgeteilten Daten des Benutzers bestimmt wird.

19. Datenbank nach einem der Ansprüche 13 bis 18, **gekennzeichnet durch** eine Speichereinrichtung für blockierte individuelle Codes.

20. Datenbank nach einem der Ansprüche 13 bis 19, **gekennzeichnet durch** eine Speichereinrichtung für persönliche Passwörter, die einem bei der Eingabe des Passwortes aufgerufenen Programm zugeordnet sind.

21. Datenbank nach einem der Ansprüche 13 bis 20, **dadurch gekennzeichnet, dass** die Datenbank isoliert ohne Links auf andere Angebote aufgebaut ist.

22. Datenbank nach einem der Ansprüche 13 bis 21, **dadurch gekennzeichnet, dass** die Datenbank gegen ein Herunterladen von Programmen geschützt ist.
